# EUROPÄISCHE PATENTSCHRIFT

(11) **EP 2 982 236 B1**
(45) Veröffentlichungstag und Bekanntmachung des Hinweises auf die Patenterteilung: **10.05.2017**
(21) Anmeldenummer: 15176296.0
(22) Anmeldetag: 10.07.2015
(51) Int. Cl.: A01F 25/16, E04H 7/26

(54) **FAHRSILO**
TRENCH SILO
SILO-COULOIRS

(30) Priorität: 04.08.2014 DE 102014111033; 04.08.2014 DE 202014103604 U
(43) Veröffentlichungstag der Anmeldung: 10.02.2016
(73) Patentinhaber: Schmack Biogas GmbH, 92421 Schwandorf (DE)
(72) Erfinder: Wolf, Markus, 92431 Neunburg v. Wald (DE)
(74) Vertreter: Glück Kritzenberger Patentanwälte PartGmbB

(56) Entgegenhaltungen:
- EP-A2- 2 612 549
- DE-A1- 19 923 078
- DE-A1-102006 054 337
- DE-U1-202014 103 604

## Beschreibung

### Technisches Gebiet

Die Erfindung betrifft ein Fahrsilo.

### Stand der Technik

Zur Konservierung hochwertiger Futtermittel für Nutztiere oder nachwachsender Rohstoffe als Energiequelle für Biogasanlagen wird organisches Pflanzenmaterial wie zum Beispiel Gras, Mais, Zuckerrüben, Bohnen oder diverse Getreidearten durch Milchsäurevergärung zu einer so genannten Silage verarbeitet. Im Fachjargon wird dies auch als Silieren bezeichnet. Für den Siliervorgang werden die zu silierenden Futtermittel bzw. nachwachsenden Rohstoffe, also das Siliergut, in Silos, insbesondere in Fahrsilos eingebracht, aufgeschichtet, mittels Fahrzeugen verdichtet und anschließend näherungsweise luftdicht verschlossen, um den Gärprozess einzuleiten. Während des Gärprozesses entsteht ein saurer, aggressiver Silage-Sickersaft oder Gärsaft, der pH-Werte bis hin zu pH 2 aufweist.

Herkömmliche Fahrsilos werden in der Regel so errichtet, dass auf einem befestigten Untergrund, nämlich auf einer Sohle bzw. Bodenplatte, wie zum Beispiel einer Beton- oder Teer- bzw. Asphaltdecke wenigstens zwei mittels Fundamenten im Untergrund verankerte Betonwände, häufig auch noch eine dritte, die beiden anderen Wände verbindende verankerte Betonwand, errichtet werden. Zwischen diesen seitlichen und gegebenenfalls auch stirnseitigen Begrenzungswänden wird so ein Siloraum als Einlagerungsbereich für das Siliergut begrenzt. Die Begrenzungswände weisen einen ausreichend großen Abstand zueinander auf, so dass sowohl die Beschickung des Siloraumes als auch die spätere Entnahme der Silage mit großen landwirtschaftlichen Nutzfahrzeugen oder anderen Lastwagen möglich ist und die Fahrzeuge beispielsweise zwischen den Wänden hindurch fahren können.

Aus bautechnischen Gegebenheiten weist ein Fahrsilo im Anschlussbereich zwischen Bodenplatte und den seitlichen, gegebenenfalls auch stirnseitigen Begrenzungswänden in der Regel seitliche bzw. stirnseitige Bodenfugen auf. Die Bodenfugen müssen insbesondere aus Gründen des Gewässerschutzes aber auch aus Korrosionsschutzgründen abgedichtet werden, um ein Eindringen des Silage-Sickersaftes möglichst zu vermeiden. Der Silage-Sickersaft kann beim Eindringen in die Fugen einerseits schädlichen Einfluss auf Bodenplatte oder Betonwände, insbesondere auf deren Bewehrung nehmen, andererseits stellt er auch für die Umwelt ein enormes Problem dar, wenn er über undichte Fugen ins Erdreich oder in Gewässer gelangt.

Die Fugenabdichtung der seitlichen bzw. stirnseitigen Bodenfugen erfolgt für gewöhnlich bereits während des Erstellens eines Fahrsilos durch Einbau von Fugenblechen, Fugenbändern oder dergleichen. Auch eine nachträgliche und/oder zusätzliche Abdichtung der Fugen wird standardmäßig durch Verfüllen der Fugen mit herkömmlichen bauchemischen Fugendichtungsmaterialien erreicht. Die DE 10 2006 054 337 A1 beispielsweise beschreibt ein Fahrsilo, bei dem eine möglichst dauerhafte Abdichtung zwischen Wandelementen und der Bodenplatte mittels eines sich über den abzudichtenden Spalt zwischen Wandelementen und Bodenplatte erstreckenden Dichtprofils angestrebt wird. Das Dokument EP 2 612 549 A2 beschreibt ein Fahrsilo nach dem Oberbegriff des Anspruchs 1. Nachteilig an herkömmlich abgedichteten Fugen ist, dass auch fachmännisch abgedichtete Fugen aufgrund eines Zusammenspiels von Witterungseinflüssen und der Einwirkung des sauren, aggressiven Silage-Sickersaftes mit der Zeit undicht werden und in regelmäßigen Zeitintervallen gewartet und gegebenenfalls ausgebessert werden müssen.

Es besteht daher weiterhin Bedarf an Fahrsilos, welche die oben genannten Nachteile beheben.

### Darstellung der Erfindung

Hier setzt die Erfindung an. Es soll ein Fahrsilo mit einer verbesserten Fugenabdichtung aufgezeigt werden. Diese Aufgabe wird erfindungsgemäß durch das Fahrsilo gemäß Patentanspruch 1 gelöst. Weitere vorteilhafte Aspekte, Details und Ausgestaltungen der Erfindung ergeben sich aus den abhängigen Ansprüchen, der Beschreibung sowie der Zeichnungen.

Die Erfindung beschreibt ein Fahrsilo umfassend eine Bodenplatte und zumindest zwei, einen Einlagerungsbereich abgrenzende, seitliche Begrenzungswände, wobei das Fahrsilo in den Anschlussbereichen von Bodenplatte und seitlichen Begrenzungswänden über jeweils eine seitliche Bodenfuge verfügt. Erfindungsgemäß ist das Fahrsilo im Bereich zumindest einer Bodenfuge mit einer Dichtungsanordnung ausgestattet, wobei die Dichtungsanordnung zumindest ein schlauchförmiges, mit einem Druckfluid beaufschlagtes Fugendichtungselement und wenigstens ein Befestigungsprofil aufweist. Das Befestigungsprofil ist dabei an der Begrenzungswand an einer dem Einlagerungsbereich zugewandten Wandoberfläche befestigt und fixiert das auf der Bodenplatte aufliegende, entlang der Bodenfuge verlaufende und mit einem Druckfluid beaufschlagte Fugendichtungselement.

Eine wirksame Abdichtung von Fugen zur Vermeidung eines Austretens von Silage-Sickersaft aus dem Einlagerungsbereich des Fahrsilos ist nicht allein aufgrund bestehender Verordnungen für den Gewässer- und Bodenschutz notwendig. Ebenso soll der Silage-Sickersaft keinesfalls bis zur Bewehrung der Begrenzungswände und/oder der Bodenplatte durchdringen, da diese sonst geschädigt werden können. Mit dem erfindungsgemäßen Fahrsilo wird vorteilhaft ein Fahrsilo mit einer besonders wirksamen und sicheren Fugenabdichtung im Bereich seitlicher Bodenfugen zur Verfügung gestellt. Mittels seiner schlauchförmigen Ausbildung ist das Fugendichtungselement flexibel genug, um einerseits dem Verlauf der seitlichen Bodenfugen präzise zu folgen und andererseits Unregelmäßigkeiten bzw. Unebenheiten in Bodenplatte und/oder Begrenzungswand auszugleichen. Die Beaufschlagung des Fugendichtungselementes mit Druckfluid erfolgt unter einem geeigneten, zur Beibehaltung der Flexibilität und Elastizität zwar möglichst geringen aber ausreichenden Druck, beispielsweise mit einem Überdruck von etwa 1 bis 3 bar, so dass das mittels des Befestigungsprofils fixierte Fugendichtungselement im Wesentlichen auf die seitliche Bodenfuge oder auf den an die Bodenfuge anschließenden Bereich der Bodenplatte aufgepresst wird und somit ein Eindringen von Silage-Sickersaft in die Bodenfuge maßgeblich verringert bzw. verhindert wird und die Bodenfuge dadurch abgedichtet werden kann. Als Druckfluid eignet sich ein gasförmiges oder ein flüssiges Druckfluid, beispielsweise Druckluft, Wasser, Glykol oder ein Wasser-Glykol-Gemisch. Beispielsweise wird das Fugendichtungselement mittels eines Kompressors mit Druckluft mit einem Druck von 3 bis 4 bar beaufschlagt.

Ein ganz besonderer Vorteil des erfindungsgemäßen Fahrsilos liegt darin, dass die Dichtungsanordnung zumindest in einem teilentleerten oder leeren Fahrsilo leicht zugänglich ist. Dadurch ist eine einfache Kontrolle der Fugenabdichtung bzw. eine Fugendichtigkeitsprüfung beispielsweise durch Sicht- und Tastkontrolle der Dichtungsanordnung möglich, wodurch die Wartung der Bodenfugen deutlich erleichtert wird. Ebenso vorteilhaft ist die Dichtungsanordnung nachrüstbar und kann beispielsweise zur Fugensanierung nachträglich in ein herkömmliches Fahrsilo eingebaut werden.

Bevorzugt handelt es sich bei dem Fugendichtungselement um einen verschließbaren Schlauch, wobei der Schlauch vorzugsweise aus elastischen Polymeren, insbesondere aus natürlichen oder synthetischen elastischen Polymeren hergestellt ist. Vorzugsweise ist das Fugendichtungselement aus einem Material mit hoher thermischer und chemischer Beständigkeit, zum Beispiel aus einem synthetischen Copolymer, insbesondere aus einem terpolymeren Elastomer wie Ethylen-Propylen-Dien-Kautschuk (EPDM) hergestellt. Alternativ kann der Schlauch auch aus Gummi, aus vulkanisiertem Gummi oder aus einem Gummiwerkstoff hergestellt sein. Insbesondere bevorzugt kann das Fugendichtungselement in Form eines Blähschlauches ausgebildet sein, welcher bei Druckbeaufschlagung seinen Durchmesser vergrößert. Zum Verschließen des Schlauches sind die Schlauchenden zum Beispiel mit einem Gewinde bzw. mit einem Gewindeabschnitt versehen, so dass Schraubverschlüsse in bzw. auf das Gewinde schraubbar sind. Alternativ können auch geeignete Stopfen und Fixierelemente, wie z. B. Schlauchklemmen zum Verschließen des Schlauches vorgesehen sein und/oder ein Schlauchende kann verschweißt sein.

Eine zusätzliche Verbesserung der Dichtwirkung kann beispielsweise auch darüber erreicht werden, dass auf die Bodenplatte wenigstens in dem Bereich, in dem das Fugendichtungselement aufliegt, eine Dichtmasse oder ein Dichtmaterial aufgebracht wird. Beispielsweise kann die Bodenplatte in dem entsprechenden Bereich mit Bitumen oder einem bitumenhaltigen Dichtmaterial beschichtet bzw. bestrichen werden bevor das Fugendichtungselement aufgelegt wird. Ebenso ist es denkbar eine Matte oder eine Materialbahn aus entsprechenden Dichtmaterialen zwischen Bodenplatte und Fugendichtungselement einzulegen.

Gemäß einer bevorzugten Ausführungsform der vorliegenden Erfindung ist das Befestigungsprofil aus einem starren, korrosionsbeständigen Material, vorzugsweise aus Edelstahl hergestellt.

Ganz besondere Vorteile ergeben sich dadurch, dass das Befestigungsprofil als Schiene, insbesondere als Winkelschiene ausgebildet ist, wobei unter einer Winkelschiene vorliegend verstanden wird, dass durch eine vorgegebene Anordnung von Schienenabschnitten oder Schenkelabschnitten ein, zwei oder mehrere Winkel ausgebildet sind. Eine Winkelschiene im vorliegenden Sinne kann somit als offenes Profil, beispielsweise als L-, V-, U-, T-, oder W-Profil aber auch als geschlossenes Profil ausgebildet sein. Das Befestigungsprofil weist wenigstens einen ersten und einen zweiten Schenkelabschnitt auf, wobei der erste Schenkelabschnitt im Wesentlichen parallel zur Wandoberfläche der Begrenzungswand orientiert und zur Befestigung an der Begrenzungswand vorgesehen ist. Der zweite Schenkelabschnitt des Befestigungsprofils steht in Gebrauchsstellung mit dem mit einem Druckfluid beaufschlagten Fugendichtungselement in Kontakt und bildet einen Halteabschnitt für das Fugendichtungselement. Der erste und der zweite Schenkelabschnitt können einen im Wesentlichen rechten Winkel oder einen stumpfen Winkel oder einen spitzen Winkel einschließen. Sofern die Schenkelabschnitte einen im Wesentlichen rechten Winkel einschließen, ist das Befestigungsprofil als L- oder T-Schiene ausgebildet und der den Halteabschnitt für das Fugendichtungselement bildende zweite

Schenkelabschnitt ist näherungsweise parallel zur Bodenplatte orientiert. Das Befestigungsprofil kann mehrstückig oder mehrteilig ausgebildet sein, wobei beispielsweise mehrere einzelne Winkelschienen stumpf gestoßen hintereinander angeordnet sind und zwar so, dass jede Winkelschiene an ihren Stirnseiten mit den benachbarten Winkelschienen in Kontakt steht.

Das Befestigungsprofil ist beispielsweise mittels Schrauben, Dübeln, Stiften, Bolzenankern oder dergleichen an der Begrenzungswand befestigbar. Der zur Befestigung an der Begrenzungswand vorgesehene erste Schenkelabschnitt weist dazu entsprechende Durchbrechungen oder Bohrungen zum Durchführen von Schrauben oder Stiften auf. Insbesondere handelt es sich bei den Durchbrechungen oder Bohrungen um Langlöcher. Im Wesentlichen L-förmige Winkelschienen sind bevorzugt derart an der Begrenzungswand befestigt, dass der den Halteabschnitt für das Fugendichtungselement bildende zweite Schenkelabschnitt mit seiner äußeren, dem ersten Schenkelabschnitt abgewandten Oberfläche nach unten weist und der Bodenplatte zugewandt ist.

Gemäß einer bevorzugten Ausführungsform ist das Befestigungsprofil im Wesentlichen U-förmig ausgebildet und weist zusätzlich einen dritten Schenkelabschnitt auf, wobei der dritte Schenkelabschnitt an den zweiten Schenkelabschnitt anschließt, so dass der zweite Schenkelabschnitt zwischen dem ersten und dritten Schenkelabschnitt angeordnet ist. Das Befestigungsprofil ist derart an der seitlichen Begrenzungswand befestigt, dass die freien Enden der ersten und dritten Schenkelabschnitte von der Bodenplatte abgewandt nach oben orientiert sind. Für eine erleichterte Montage vor Ort ist der dritte Schenkelabschnitt mit entsprechend großen Durchbrechungen ausgestattet, so dass der erste, zur Befestigung an der Begrenzungswand dienende Schenkelabschnitt in notwendigem Maße für ein vorgegebenes Montage-Werkzeug zugänglich ist.

Insbesondere bevorzugt weist die Dichtungsanordnung zusätzlich ein Drainagerohr auf, wobei das Drainagerohr entlang des Befestigungsprofils angeordnet ist und vorzugsweise mittels des Befestigungsprofils gehaltert wird. Besonders vorteilhaft ist das Drainagerohr in Kombination mit einem U-förmigen Befestigungsprofil vorgesehen, wobei das Drainagerohr auf der nach oben weisenden, offenen Seite des U-förmig ausgebildeten Befestigungsprofils angeordnet ist und auf den freien Enden des ersten und dritten Schenkelabschnittes aufliegt. Besondere Vorteile ergeben sich dabei dadurch, dass der erste und/oder der dritte Schenkelabschnitt des Befestigungsprofils im Bereich ihrer jeweiligen freien Enden zusätzlich mit einem Biegeabschnitt ausgestattet sind. Zur Ausbildung solcher Biegeabschnitte sind die Schenkelabschnitte beispielsweise in Richtung des Einlagerungsbereiches abgewinkelt oder abgeknickt bzw. aufgekantet, so dass die freien Enden der Biegeabschnitte jeweils von der Begrenzungswand abgewandt sind und die Biegeabschnitte eine Auflagefläche für das Drainagerohr bilden. Das Drainagerohr kann beispielsweise mit Drähten bzw. Kabelbindern, z. B. mit einem Edelstahl V2A Bindedraht, an dem Befestigungsprofil zusätzlich fixiert werden, wobei die Drähte bzw. Kabelbinder durch dafür vorgesehene Löcher im Befestigungsprofil geführt werden. Vorteilhaft kann über das Drainagerohr Silage-Sickersaft gesammelt und in den Einlagerungsbereich zurück geführt werden. Das Drainagerohr dient jedoch auch als optisches Signal beim Beschicken und Entleeren des Fahrsilos, um einer versehentlichen Beschädigung des Befestigungsprofils oder des Fugendichtungselementes durch die Nutzfahrzeuge vorzubeugen.

Um dem Fugendichtungselement zusätzlichen Halt in seiner fixierten Position zu geben und um ein Herausrutschen in horizontaler Richtung zu verhindern, ist in Ausführungsformen, in denen das Befestigungsprofil lediglich einen ersten und zweiten Schenkelabschnitt aufweist, der zweite Schenkelabschnitt des Befestigungsprofils an seinem freien Ende bevorzugt mit einem Anschlagabschnitt ausgestattet. Beispielsweise geht der zweite Schenkelabschnitt durch Abknicken oder Umbiegen mit einem näherungsweise rechten oder stumpfen Winkel in den Anschlagabschnitt über, so dass der Anschlagabschnitt beispielsweise wiederum nahezu parallel zur Wandoberfläche orientiert ist oder in einer einen stumpfen Winkel mit der Wandoberfläche einschließenden Ebene angeordnet ist. Ebenso sind Ausführungsformen bevorzugt in denen der zweite Schenkelabschnitt des Befestigungsprofils an seinem freien Ende mit einem Führungsabschnitt ausgestattet ist. Beispielsweise kann in Ausführungsformen in denen der zweite Schenkelabschnitt in einem stumpfen Winkel an den ersten Schenkelabschnitt anschließt der Führungsabschnitt im Wesentlichen parallel zur Bodenplatte orientiert sein, wodurch das Einschieben oder Einführen des Fugendichtungselementes zwischen Bodenplatte und Befestigungsprofil erleichtert wird.

Alternativ oder additiv kann der zweite Schenkelabschnitt des Befestigungsprofils für einen verbesserten Halt des Fugendichtungselementes auch geknickt ausgebildet sein, wobei ein erster und ein zweiter Flächenbereich des zweiten Schenkelabschnittes einen stumpfen Winkel einschließen. Dabei beschreiben der erste und zweite Flächenbereich des zweiten Schenkelabschnittes und die Bodenplatte zusammen im Wesentlichen ein Dreieck, in dem das Fugendichtungselement aufgenommen ist. Ein geknickt ausgebildeter zweiter Schenkelabschnitt kann besonders vorteilhaft bei allen Ausführungsformen, nämlich bei solchen mit lediglich einem ersten und zweiten Schenkelabschnitt, aber auch bei solchen mit einem zusätzlichen dritten Schenkelabschnitt vorgesehen sein.

Vorteilhaft kann die Dichtungsanordnung zur Vermeidung eines Eindringens von Silage-Sickersaft zwischen Befestigungsprofil und Begrenzungswand zusätzlich ein flächiges Dichtmittel aufweisen, wobei das flächige Dichtmittel zwischen dem Befestigungsprofil und der seitlichen Begrenzungswand angeordnet und im Wesentlichen parallel zur Wandoberfläche der Begrenzungswand orientiert ist. Das flächige Dichtmittel ist vorzugsweise parallel zum ersten Schenkelabschnitt des Befestigungsmittels orientiert und ist sandwichartig zwischen Wandoberfläche und erstem Schenkelabschnitt angeordnet bzw. eingelegt.

Bei dem flächigen Dichtmittel handelt es sich beispielsweise um einen Flachstreifen oder eine Matte, welche aus einem elastischen Material mit hoher thermischer und chemischer Beständigkeit, bevorzugt aus einem Polymer, insbesondere bevorzugt aus einem Copolymer, beispielsweise aus einem terpolymeren Elastomer, wie Ethylen-Propylen-Dien-Kautschuk (EPDM) hergestellt ist. Das flächige Dichtmittel kann in alternativen Ausführungen jedoch auch aus einem elastischen Kunststoff oder Kunstharz, insbesondere aus Polyurethan, beispielsweise aus einem Polyurethan-Schaum oder aus Gummi bzw. Gummiwerkstoff hergestellt sein. In besonders bevorzugten Ausführungsformen weist das Dichtmittel zusätzlich eine oder mehrere Ausnehmungen oder Aussparungen bzw. Durchbrechungen oder Bohrungen zur Aufnahme bzw. zum Durchführen der für die Befestigung der Befestigungsprofile an der Begrenzungswand vorgesehenen Schrauben, Dübel oder Stifte auf.

Alternativ kann zur Vermeidung eines Eindringens von Silage-Sickersaft in den Spalt zwischen Befestigungsprofil und Begrenzungswand auch ein abdichtendes Material zwischen Befestigungsprofil und Begrenzungswand eingebracht oder in den Längsrandbereichen des Befestigungsprofils aufgetragen werden. Denkbar hierfür ist beispielsweise ein Ausspritzen mit Bauschaum, wie zum Beispiel PU-Schaum, oder mit Silikon- oder Acryldichtstoffen.

In besonders bevorzugten Ausführungsformen kann in dem Fahrsilo zusätzlich eine stirnseitige Begrenzungswand vorgesehen sein, wobei das Fahrsilo im Anschlussbereich von Bodenplatte und stirnseitiger Begrenzungswand eine stirnseitige Bodenfuge aufweist und wobei das Fugendichtungselement zur gleichzeitigen Abdichtung der seitlichen und stirnseitigen Bodenfugen umlaufend und einstückig ausgebildet ist. Umlaufend und einstückig ausgebildete Fugendichtungselemente bewirken besonders vorteilhaft über die gesamte Länge der seitlichen und stirnseitigen Bodenfugen eine verbesserte und vor allem gleichmäßige Dichtwirkung, da Verbindungs- oder Anschlussstellen bzw. Nahtstellen vermieden werden, welche in der Regel potentielle Undichtigkeitsstellen darstellen. In den bevorzugten Ausführungsformen, in denen ein umlaufendes, einstückiges Fugendichtungselement zur gleichzeitigen Abdichtung der seitlichen und stirnseitigen Bodenfugen verwendet wird, ist das Befestigungsprofil wie oberhalb beschrieben mehrstückig oder mehrteilig ausgebildet, wobei in den Eckbereichen des Fahrsilos die einzelnen Winkelschienen über entsprechende Gehrungen aneinander anschließen. Vorzugsweise sind die einzelnen, in den Eckbereichen angeordneten Winkelschienen dabei in einem stumpfen Winkel miteinander verbunden, so dass das Befestigungsprofil in den Eckbereichen näherungsweise bogenförmig ausgebildet ist.

Zur Messung des Druckes in dem mit Druckfluid beaufschlagten Fugendichtungselement ist vorteilhaft zusätzlich eine Messeinheit vorgesehen. Insbesondere bevorzugt handelt es sich bei der Messeinheit um ein Druckmessgerät (Manometer), das zur Messung des relativen Fluiddrucks innerhalb des Fugendichtungselementes eingerichtet ist.

Gemäß einer besonders bevorzugten Ausführungsform der vorliegenden Erfindung ist zumindest in einer seitlichen Begrenzungswand zumindest eine vertikal verlaufende Fuge ausgebildet. Vertikal verlaufende Fugen in den Begrenzungswänden können beispielsweise herstellungsbedingt reine Arbeitsfugen sein, welche beispielsweise aufgrund einer Arbeitspause zwischen dem Vergießen des Betons einzelner Abschnitte bzw. zwischen den einzelnen Fertigteilen entstehen. Vertikal verlaufende Fugen können jedoch auch gezielt aus Konstruktionsgründen vorgesehen sein und als so genannte Bewegungs- oder Dehnfugen zur Vermeidung von Spannungsrissen in den Begrenzungswänden dienen. Bewegungs- oder Dehnfugen sind vor allem bei sehr langen Begrenzungswänden sinnvoll und notwendig, da in langen Begrenzungswänden allein die thermische Ausdehnung zu starken Spannungen in den Betonbauteilen führen kann.

Zur Abdichtung der vertikal verlaufenden Fugen ist zumindest eine Begrenzungswand mit wenigstens einer, im Bereich einer vertikalen Fuge angeordneten und die Begrenzungswand durchbrechenden Öffnung versehen und die Öffnung ist mit einer Dichtungsvorrichtung ausgestattet. Die Dichtungsvorrichtung ist dabei mehrteilig ausgebildet und weist zumindest ein in der Öffnung angeordnetes Dichtelement und wenigstens zwei Befestigungselemente auf. Das Dichtelement erstreckt sich über mindestens eine Wandstärke der Begrenzungswand und weist zwei über die Wandoberflächen hinausragende Abschnitte auf. Die Befestigungselemente sind sich gegenüberliegend an den Wandoberflächen angeordnet.

Das Dichtelement der Dichtungsvorrichtung zur Abdichtung vertikal verlaufender Fugen ist vorzugsweise aus einem elastischen Material mit hoher thermischer und chemischer Beständigkeit, bevorzugt aus einem Polymer, insbesondere bevorzugt aus einem Copolymer, beispielsweise aus einem terpolymeren Elastomer, wie Ethylen-Propylen-Dien-Kautschuk (EPDM) hergestellt, kann in alternativen Ausführungen jedoch auch aus einem elastischen Kunststoff oder Kunstharz, insbesondere aus Polyurethan, beispielsweise aus einem Polyurethan-Schaum hergestellt sein. Das Dichtelement ist derart dimensioniert, dass seine Querschnittsmaße geringfügig kleiner sind als die lichte Weite der die Begrenzungswand durchbrechenden Öffnung. Da das Dichtelement jeweils einen über die sich gegenüberliegenden Wandoberflächen hinausragenden Abschnitt aufweist, wird bei der Befestigung der Befestigungselemente an der Begrenzungswand ein Pressdruck auf das Dichtelement ausgeübt, wodurch das Dichtelement eine leichte Verformung erfährt und gleichsam in die Öffnung eingepresst wird. Durch dieses Einpressen des Dichtelementes in die die Begrenzungswand durchbrechende Öffnung füllt das Dichtelement die Öffnung bezogen auf ihre lichte Weite im Wesentlichen vollständig aus und ist formschlüssig in einem Klemmsitz in der Öffnung aufgenommen, wodurch ein bestmöglicher Dichtungseffekt erreicht wird.

Besonders vorteilhaft unterbricht die mit einer Dichtungsvorrichtung ausgestattete und die Begrenzungswand im Bereich der vertikalen Fuge durchbrechende Öffnung den an bzw. in einer vertikalen Fuge stattfindenden Fluss von Silage-Sickersaft nach unten. Der nach unten fließende Silage-Sickersaft wird beim Antreffen an der mit einer Dichtungsvorrichtung ausgestatteten Öffnung somit in seinem Fluss behindert und umgeleitet. Besonders vorteilhaft wird die Flussrichtung des Silage-Sickersaftes an dieser Stelle derart geändert, dass sich der Silage-Sickersaft wieder an der Wandoberfläche der Begrenzungswand sammelt und so beispielsweise wieder im Einlagerungsbereich des Fahrsilos aufgefangen und von dort mittels eines Ableitungssystems kontrolliert abgeführt werden kann.

Sowohl die Bodenfugen als auch die vertikalen Fugen eines Fahrsilos sind so genannte Wartungsfugen, deren Dichtigkeit über die gesamte Lebensdauer eines Fahrsilos immer wieder geprüft und gegebenenfalls durch entsprechende Maßnahmen wiederhergestellt werden muss. Mittels der in Kombination vorhandenen Dichtungsanordnung zur Abdichtung von Bodenfugen und der Dichtungsvorrichtung zur Abdichtung vertikaler Fugen kann in dem Fahrsilo eine besonders wirksame und dauerhafte Abdichtung aller Fugen erreicht werden, da die Fugen durch die vorgesehene Dichtungsvorrichtung und die vorgesehene Dichtungsanordnung kaum mehr dem naturgemäß auftretenden Verschleiß unterliegen. Ganz besonders vorteilhaft ist auch eine nachträgliche Integration der Dichtungsvorrichtung sowie der Dichtungsanordnung in einem bereits bestehenden, herkömmlichen Fahrsilo möglich, so dass undichte oder undicht gewordene Fugen erstmalig oder erneut abgedichtet oder saniert werden können.

Bevorzugt handelt es sich bei der die seitliche Begrenzungswand durchbrechenden Öffnung um eine im Wesentlichen zylinderförmige Öffnung mit einem in vertikaler Richtung kreisrunden Querschnitt, welche bevorzugt durch eine Kernbohrung erzeugt wird. Sofern die zylinderförmige Öffnung entsprechend ihrer Zylinderachse im Wesentlichen senkrecht zur Wandoberfläche verläuft, ist das Dichtelement in diesen bevorzugten Ausführungsformen im Wesentlichen in Form eines geraden Kreiszylinders ausgebildet. Der Durchmesser des Dichtelementes ist vorzugsweise geringfügig kleiner als der Durchmesser der zylinderförmigen Öffnung. Mittels einer Kernbohrung im Bereich vertikaler Fugen einer Begrenzungswand kann besonders vorteilhaft auch in herkömmlichen Fahrsilos nachträglich eine Dichtungsvorrichtung integriert werden, wodurch auch eine Fugensanierung von undichten bzw. sanierungsbedürftigen vertikalen Fugen in Fahrsilos möglich ist.

Vorteilhaft ist die die seitliche Begrenzungswand durchbrechende Öffnung in der zur Bodenplatte benachbarten unteren Hälfte der seitlichen Begrenzungswand, bevorzugt im unteren Drittel der seitlichen Begrenzungswand und insbesondere bevorzugt in einem an die Bodenplatte anschließenden Bereich der seitlichen Begrenzungswand angeordnet. Ebenso vorteilhaft weist jede seitliche Begrenzungswand zwei oder drei oder mehrere vertikal verlaufende Fugen auf und jede vertikal verlaufende Fuge weist zumindest eine im Fugenbereich angeordnete und die seitliche Begrenzungswand durchbrechende Öffnung auf, wobei jede Öffnung mit einer Dichtungsvorrichtung ausgestattet ist.

Bevorzugt weist jedes Befestigungselement der Dichtungsvorrichtung zur Abdichtung vertikaler Fugen zumindest einen flächig ausgebildeten vertikalen Abschnitt auf, wobei der vertikale Abschnitt im Wesentlichen parallel zur Wandoberfläche der seitlichen Begrenzungswand orientiert ist. Insbesondere bevorzugt sind die Befestigungselemente abgewinkelt ausgebildet und weisen zusätzlich zu dem im Wesentlichen parallel zur Wandoberfläche orientierten vertikalen Abschnitt einen horizontalen Abschnitt auf, wobei der vertikale und der horizontale Abschnitt einen im Wesentlichen rechten Winkel oder einen stumpfen Winkel von geringfügig mehr als 90° einschließen.

Um eine gegenseitige räumliche Behinderung von dem Befestigungsprofil der Dichtungsanordnung zur Abdichtung von Bodenfugen und dem Befestigungselement der Dichtungsvorrichtung zur Abdichtung vertikaler Fugen zu vermeiden, ist die Ausgestaltung des Befestigungsprofils und der Befestigungselemente bevorzugt aufeinander abgestimmt. Möglicherweise kann das Befestigungsprofil für das schlauchförmige Fugendichtungselement zur Umgehung der im Bereich der vertikalen Fugen angeordneten Dichtungsvorrichtung mehrstückig ausgebildet sein, so dass beispielsweise bezogen auf die Längserstreckung der Begrenzungswand je ein Teilstück des Befestigungsprofils zwischen zwei Befestigungselementen der Dichtungsvorrichtung angeordnet ist. Das schlauchförmige Fugendichtungselement zur Abdichtung der Bodenfuge wird in dieser Ausführungsform in seinem Längsverlauf sowohl unter das Befestigungsprofil, als auch unter die Befestigungselemente eingeschoben und wird somit durch Befestigungsprofil und Befestigungselemente in Position gehalten und fixiert.

Gemäß einer alternativen Ausführungsform können die einzelnen Teilstücke bzw. Winkelschienen des mehrstückig ausgebildeten Befestigungsprofils derart zueinander angeordnet sein, dass die Dichtungsvorrichtungen im Bereich vertikaler Fugen sowohl in horizontaler wie auch in vertikaler Ausrichtung durch das Befestigungsprofil umlaufen werden. Dazu sind die Winkelschienen in bestimmten Winkeln zueinander angeordnet, so dass eine Umgehung bzw. Umbauung der Befestigungselemente der Dichtungsvorrichtung möglich wird.

Zur weiteren vorteilhaften Ausgestaltung der Dichtungsvorrichtung zur Abdichtung der vertikalen Fugen können zusätzlich wenigstens zwei flächige, jeweils zumindest einen vertikalen Abschnitt aufweisende Dichtmatten vorgesehen sein, wobei der vertikale Abschnitt der flächigen Dichtmatten im Wesentlichen parallel zur Wandoberfläche orientiert und zwischen der Wandoberfläche und den Befestigungselementen angeordnet ist. Die Dichtmatten sind vorzugsweise aus einem elastischen Material mit hoher thermischer und chemischer Beständigkeit hergestellt. Besonders vorteilhaft weist jede flächige Dichtmatte im Bereich ihres vertikalen Abschnittes eine an Geometrie und Abmessungen des Dichtelementes angepasste Durchbrechung auf, wobei die flächige Dichtmatte mittels der Durchbrechung auf den über die Wandoberfläche hinausragenden Abschnitt des Dichtelementes aufsteckbar ist.

Gemäß einer besonders bevorzugten Weiterbildung weist die Dichtungsvorrichtung zur Abdichtung der vertikalen Fugen zusätzlich ein Druckelement zur Ausübung einer in Richtung der Bodenplatte orientierten Kraft auf. Das Druckelement kann beispielsweise ein oberhalb eines Befestigungselementes an der Begrenzungswand angebrachter Edelstahlwinkel mit Bohrungen, Kontermuttern und Schrauben sein, wobei mittels der Schrauben eine nach unten gerichtete Druckkraft auf das Befestigungselement ausgeübt werden kann. In den Ausführungsformen mit Druckelement sind die vertikalen Abschnitte des Befestigungselementes wiederum so ausgebildet, dass sie einerseits an ihrem oberen Rand eine Anlagefläche für die durch die Bohrungen des Druckelementes geführten Schrauben zur Verfügung stellen und andererseits für die Befestigung an der Begrenzungswand Langlöcher aufweisen, durch welche die zur Befestigung an der Begrenzungswand vorgesehenen Schrauben geführt sind. So kann das Befestigungselement mittels der übertragenen axialen Druckkraft der Schrauben des Druckelementes in Richtung Bodenplatte gedrückt werden.

Mit vorliegender Erfindung wird ebenso ein Verfahren zur Abdichtung und Sanierung von Bodenfugen in einem Fahrsilo zur Verfügung gestellt. Erfindungsgemäß wird in einem ersten Schritt des Verfahrens eine Dichtungsanordnung bereitgestellt, wobei die Dichtungsanordnung zumindest ein schlauchförmiges, mit einem Druckfluid beaufschlagbares Fugendichtungselement und wenigstens ein Befestigungsprofil aufweist. Ein zweiter Schritt des Verfahrens umfasst das Positionieren und Befestigen des Befestigungsprofils an einer einem Einlagerungsbereich zugewandten Wandoberfläche einer Begrenzungswand des Fahrsilos in einem an die Bodenplatte anschließenden Bereich. In weiteren Schritten des Verfahrens wird zunächst das nicht mit Druckfluid beaufschlagte Fugendichtungselement zwischen die Bodenplatte und das an der Begrenzungswand befestigte Befestigungsprofil eingeschoben und schließlich mit Druckfluid beaufschlagt und verschlossen.

Durch das erfindungsgemäße Verfahren kann mit relativ wenigen und einfachen Schritten eine Abdichtung von Bodenfugen in einem Fahrsilo erreicht werden. Besonders vorteilhaft ist die Abdichtung von Bodenfugen durch das erfindungsgemäße Verfahren auch in einem bestehenden, herkömmlichen Fahrsilo nachträglich möglich, so dass das Verfahren insbesondere zur Sanierung undicht gewordener Bodenfugen angewandt werden kann.

Vorteilhaft kann vor oder während des Positionierens und Befestigens des Befestigungsprofils zusätzlich ein Dichtmittel zwischen dem Befestigungsprofil und der seitlichen Begrenzungswand eingebracht werden. Einem Eindringen von Silage-Sickersaft zwischen Befestigungsprofil und Wandoberfläche kann dadurch effektiv entgegengewirkt werden.

Besonders bevorzugt kann in dem Verfahren ferner der Druck in dem mit Druckfluid beaufschlagten Fugendichtungselement mittels einer bereitgestellten Messeinheit zur Messung des Druckes gemessen werden, wobei ganz besonders bevorzugt zur Durchführung einer Leckagekontrolle die Messung des Druckes in vorgegebenen Zeitintervallen wiederholt wird. An der Messeinheit, welche in kommunizierender Verbindung mit dem Fugendichtungselement steht und zur Messung des relativen Fluiddrucks innerhalb des Fugendichtungselementes eingerichtet ist, kann zu vorgegebenen Zeitpunkten der Fluiddruck abgelesen werden, welcher im Verlauf der Zeit in einem relativ konstanten Bereich liegen sollte. Ein plötzlich auftretender Druckabfall oder auch ein langsam erfolgender Druckverlust deutet auf ein Leck im Fugendichtungselement hin, was in der Folge zu Undichtigkeiten in den Bodenfugen des Fahrsilos führt und geeignete Korrektur- bzw. Reparaturmaßnahmen erfordert. Diese Leckagekontrolle bringt insbesondere für das Wartungs- oder Arbeitspersonal bzw. für den Betreiber eines Fahrsilos enorme Vorteile mit sich, da eine Undichtigkeit in den Fugen schnell erkannt werden kann und entsprechende Gegenmaßnahmen schnell eingeleitet werden können.

Mit dem vorliegenden Verfahren kann vorzugsweise auch eine Abdichtung oder Sanierung sämtlicher Fugen in einem Fahrsilo erreicht werden, wenn zur gleichzeitigen Abdichtung vertikal verlaufender Fugen zusätzlich im Bereich einer vertikalen Fuge eine die Begrenzungswand durchbrechende Öffnung, beispielsweise mittels einer Kernbohrung, eingebracht wird und die Öffnung mit einer Dichtungsvorrichtung ausgestattet wird.

### Kurze Beschreibung der Zeichnungen

Die Erfindung soll nachfolgend anhand von Ausführungsbeispielen im Zusammenhang mit den Zeichnungen näher erläutert werden. Es zeigen
- Fig. 1: beispielhaft schematisch dargestellt eine Ausführungsform eines erfindungsgemäßen Fahrsilos in perspektivischer Ansicht,
- Fig. 2: beispielhaft einen Vertikalschnitt einer seitlichen Begrenzungswand einer Ausführungsform des erfindungsgemäßen Fahrsilos mit Dichtungsanordnung,
- Fig. 3: beispielhaft einen Vertikalschnitt einer seitlichen Begrenzungswand einer weiteren Ausführungsform des erfindungsgemäßen Fahrsilos mit Dichtungsanordnung,
- Fig. 4: beispielhaft einen Vertikalschnitt einer seitlichen Begrenzungswand einer weiteren Ausführungsform des erfindungsgemäßen Fahrsilos mit Dichtungsanordnung,
- Fig. 5: schematisch dargestellt einen Ausschnitt einer Ausführungsform eines Befestigungsprofils in perspektivischer Ansicht,
- Fig. 6: beispielhaft einen Vertikalschnitt einer seitlichen Begrenzungswand im Bereich einer vertikal verlaufenden Fuge mit einer Ausführungsform einer Dichtungsvorrichtung,
- Fig. 7a: einen schematischen Ausschnitt einer Ausführungsform eines Fahrsilos in einem parallel zur Längsachse verlaufenden Längsschnitt und
- Fig. 7b: schematisch dargestellt eine Draufsicht von oben auf den Ausschnitt des Fahrsilos der Figur 7a.

### Wege zur Ausführung der Erfindung

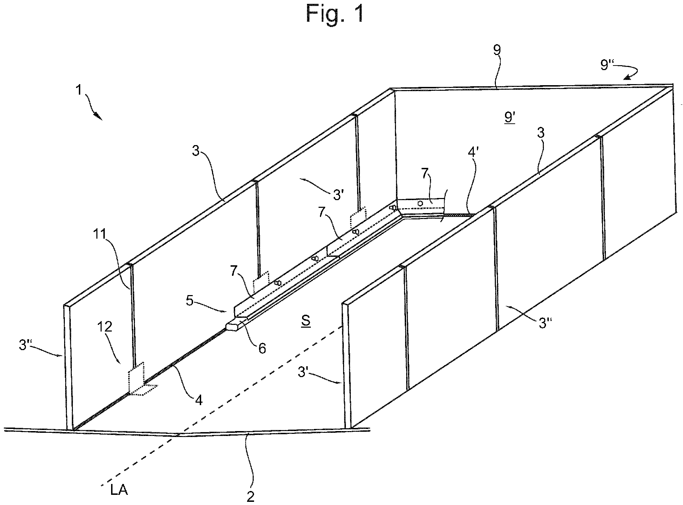

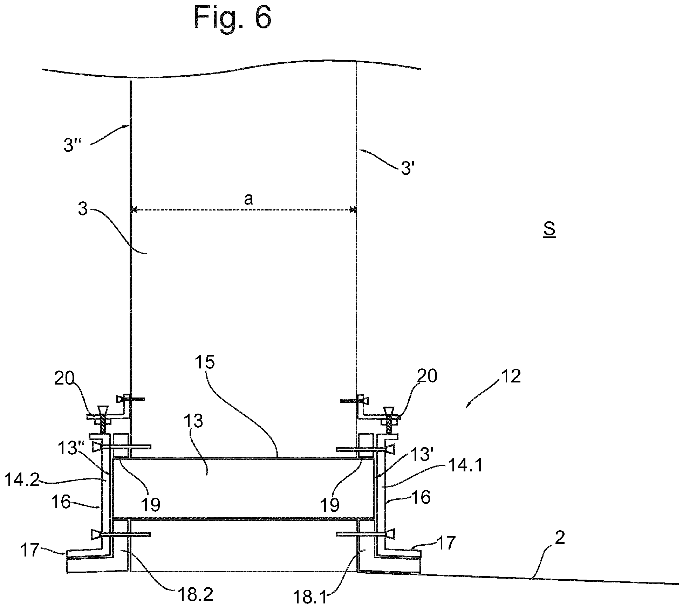

In der Figur 1 ist ein bevorzugtes Ausführungsbeispiel eines erfindungsgemäßen Fahrsilos 1 in perspektivischer Ansicht schematisch dargestellt. Das Fahrsilo 1 weist eine Bodenplatte 2, zwei seitliche Begrenzungswände 3 und eine stirnseitige Begrenzungswand 9 auf. Die mittels Fundamenten im Boden verankerten Begrenzungswände 3, 9 begrenzen einen Einlagerungsbereich S für Siliergut, wobei jede Begrenzungswand 3, 9 jeweils eine dem Einlagerungsbereich S zugewandte Wandoberfläche 3', 9' und eine der Wandoberfläche 3', 9' gegenüberliegende Wandoberfläche 3", 9" aufweist. Die seitlichen Begrenzungswände 3 sind im Wesentlichen parallel zueinander und parallel zu einer Längsachse LA des Fahrsilos 1 geführt und die im Wesentlichen senkrecht zur Längsachse LA und zu den seitlichen Begrenzungswänden 3 ausgerichtete stirnseitige Begrenzungswand 9 verbindet an einem stirnseitigen Ende des Fahrsilos 1 die beiden seitlichen Begrenzungswände 3 miteinander. Aufgrund bautechnischer Gegebenheiten sind im Anschlussbereich zwischen den seitlichen Begrenzungswänden 3 und der Bodenplatte 2 bzw. zwischen der stirnseitigen Begrenzungswand 9 und der Bodenplatte 2 seitliche Bodenfugen 4 bzw. eine stirnseitige Bodenfuge 4' ausgebildet. In den Begrenzungswänden 3 des Fahrsilos 1 sind vertikal verlaufende Fugen 11 vorhanden, welche baubedingt bzw. konstruktionsbedingt als Dehnfugen dienen. Zur Abdichtung der vertikalen Fugen 11 können die Begrenzungswände 3 im Bereich der vertikalen Fugen 11 mit Öffnungen 15 (in Figur 1 nicht sichtbar, siehe Figur 6) versehen sein, welche jeweils mit einer mehrteiligen Dichtungsvorrichtung 12 ausgestattet sind.

Zur effektiven Abdichtung der seitlichen und stirnseitigen Bodenfugen 4, 4' ist das Fahrsilo 1 mit einer Dichtungsanordnung 5 ausgestattet, wobei die Dichtungsanordnung 5 ein mit Druckfluid beaufschlagbares Fugendichtungselement 6 und ein Befestigungsprofil 7 aufweist. Aus Übersichtsgründen ist in der Figur 1 sowohl das Fugendichtungselement 6 als auch das Befestigungsprofil 7 lediglich teilweise und in Abschnitten dargestellt, wobei das Fugendichtungselement 6 sowie das Befestigungsprofil 7 im Bereich der seitlichen Bodenfuge 4 bzw. der seitlichen Begrenzungswand 3 jeweils angeschnitten gezeigt sind.

Das Befestigungsprofil 7 ist mittels Schrauben und Dübeln an den Begrenzungswänden 3, 9 befestigt und zwar jeweils an den dem Einlagerungsbereich S zugewandten Wandoberflächen 3', 9' der Begrenzungswände 3, 9. Im dargestellten Beispiel handelt es sich bei dem Befestigungsprofil 7 um eine im Wesentlichen L-förmigen Winkelschiene, wobei das Befestigungsprofil 7 mehrstückig ausgebildet und durch mehrere einzelne Winkelschienen zusammengesetzt ist. Die einzelnen Winkelschienen sind dabei derart hintereinander angeordnet, dass sich das Befestigungsprofil 7 über die gesamte Länge der seitlichen Begrenzungswände 3 und der stirnseitigen Begrenzungswand 9 erstreckt, wobei jede einzelne Winkelschiene an ihren stirnseitigen Enden mit den benachbarten Winkelschienen in Kontakt steht. Um auch in den Eckbereichen eine optimale Kontaktierung der einzelnen benachbarten Winkelschienen sicherzustellen, sind die in den Eckbereichen des Fahrsilos 1 angeordneten Winkelschienen mit einer entsprechenden Gehrung versehen.

Das entlang der seitlichen und stirnseitigen Bodenfugen 4, 4' verlaufende und durch die Beaufschlagung mit einem Druckfluid unter einem vorgegebenen Druck stehende schlauchförmige Fugendichtungselement 6 liegt auf der Bodenplatte 2 auf und wird durch das Befestigungsprofil 7 in seiner Position fixiert. Bei dem Fugendichtungselement 6 des dargestellten Beispiels handelt es sich um einen Blähschlauch, der aus Gründen der effektiven und optimalen Abdichtung der seitlichen und stirnseitigen Bodenfugen 4, 4' einstückig und umlaufend ausgebildet ist.

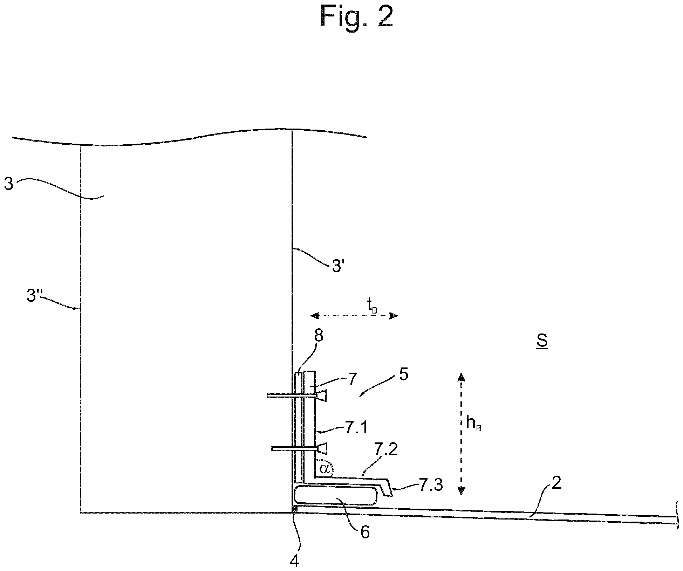

Die Figur 2 zeigt einen Ausschnitt eines senkrecht zur Wandoberfläche 3' verlaufenden Vertikalschnitts einer seitlichen Begrenzungswand 3 im Bereich einer seitlichen Bodenfuge 4 mit einer bevorzugten Ausführungsform einer Dichtungsanordnung 5 bestehend aus einem Befestigungsprofil 7, einem Fugendichtungselement 6 und einem flächigen Dichtmittel 8.

Das Befestigungsprofil 7 ist an der dem Einlagerungsbereich S des Fahrsilos zugewandten Wandoberfläche 3' der seitlichen Begrenzungswand 3 mittels Schrauben und Dübeln befestigt, ist im dargestellten Beispiel in Form einer im Wesentlichen L- förmigen Winkelschiene mit einem ersten und einem zweiten Schenkelabschnitt 7.1, 7.2 ausgebildet und weist eine Höhe h_{B} von rund 100 mm und eine Tiefe t_{B} von ebenfalls rund 100 mm auf. Der erste Schenkelabschnitt 7.1 des Winkelprofils ist näherungsweise parallel zur Wandoberfläche 3' orientiert und zur Befestigung an der Begrenzungswand 3 vorgesehen. Um bei der Befestigung gewisse Toleranzen oder Unebenheiten ausgleichen zu können, ist der erste Schenkelabschnitt 7.1 des Befestigungsprofils 7 mit Langlöchern zum Durchführen von Schrauben versehen.

Der zweite Schenkelabschnitt 7.2 des Befestigungsprofils 7 bildet einen Halteabschnitt für das Fugendichtungselement 6 und schließt mit dem ersten Schenkelabschnitt 7.1 einen im Wesentlichen rechten Winkel α ein. Ein Anschlagabschnitt 7.3 am freien Ende des zweiten, näherungsweise parallel zur Bodenplatte 2 ausgerichteten Schenkelabschnittes 7.2 des Befestigungsprofils 7 dient als Sicherung gegen ein unbeabsichtigtes Herausrutschen oder Abgleiten des mittels des Befestigungsprofils 7 gehalterten bzw. in seiner Lage fixierten Fugendichtungselementes 6, welches auf der Bodenplatte 2 aufliegend entlang der Bodenfuge 4 verläuft und in einem mit Druckfluid beaufschlagten Zustand mit dem zweiten Schenkelabschnitt 7.2 in Kontakt steht.

Das in Form eines Schlauches aus elastischem Ethylen-Propylen-Dien-Kautschuk (EPDM) ausgebildete Fugendichtungselement 6 ist mittels geeigneter Gewindestopfen verschließbar und steht durch die Beaufschlagung mit einem Druckfluid unter einem vorgegebenen Druck. Das Fugendichtungselement 6 wird mittels des Befestigungsprofils 7 in seiner entlang der Bodenfuge 4 verlaufenden Position gehalten, wobei das Befestigungsprofil 7 so an der Begrenzungswand 3 angeordnet ist, dass der Abstand zwischen Bodenplatte 2 und dem näherungsweise parallel dazu verlaufenden zweiten Schenkelabschnitt 7.2 des Befestigungsprofils 7 kleiner ist als der Durchmesser des mit Druckfluid beaufschlagten Fugendichtungselementes 6 in dessen frei vorliegenden Zustand wäre. Dadurch wird ein Pressdruck auf das mit Druckfluid beaufschlagte Fugendichtungselement 6 ausgeübt und das Fugendichtungselement 6 wird gleichsam zwischen Bodenplatte 2 und zweitem Schenkelabschnitt 7.2 des Befestigungsprofils 7 eingepresst bzw. eingequetscht. Durch den ausgeübten Pressdruck nimmt das in dieser Weise zwischen Bodenplatte 2 und zweitem Schenkelabschnitt 7.2 gehalterte, mit Druckfluid beaufschlagte schlauchförmige Fugendichtungselement 6 aufgrund der Elastizität des Schlauchmaterials eine von der kreisrunden Querschnittsform abweichende abgeflachte Querschnittsform ein.

Zwischen der Wandoberfläche 3' und dem ersten Schenkelabschnitt 7.1 des Befestigungsprofils 7 ist in dem dargestellten Beispiel ein flächiges Dichtmittel 8 in Form eines aus elastischem Ethylen-Propylen-Dien-Kautschuk (EPDM) hergestellten Flachstreifens angeordnet. Das Dichtmittel 8 ist in Form und Größe so an die Dimension des ersten Schenkelabschnittes 7.1 angepasst, dass der erste Schenkelabschnitt 7.1 an seiner der Begrenzungswand 3 zugewandten Oberfläche nahezu vollflächig durch das Dichtmittel 8 bedeckt ist. Zur Erleichterung des Durchtritts der zur Befestigung des Befestigungsprofils 7 vorgesehenen Schrauben ist das Dichtmittel 8 mit entsprechenden Durchbrechungen oder Ausnehmungen versehen. Beim Befestigen des Befestigungsprofils 7 an der Begrenzungswand 3 wird das Dichtmittel 8 unter Einwirkung einer näherungsweise horizontal ausgerichteten Druckkraft oder eines Pressdruckes durch das Befestigungsprofil 7 an die Wandoberfläche 3' gedrückt bzw. angepresst.

Eine sichere Abdichtung der Bodenfuge 4 kann letztlich dadurch erreicht werden, dass durch das Einquetschen des Fugendichtungselementes 6 zwischen Bodenplatte 2 und Befestigungsprofil 7 einerseits und das gleichzeitige Anpressen des Dichtmittels 8 an die Wandoberfläche 3' der Begrenzungswand 3 andererseits der beim Siliervorgang im Einlagerungsbereich S des Fahrsilos 1 entstehende Silage-Sickersaft an einem Vordringen bis zur Bodenfuge 4 und damit an einem Eindringen in die Bodenfuge 4 effektiv gehindert wird.

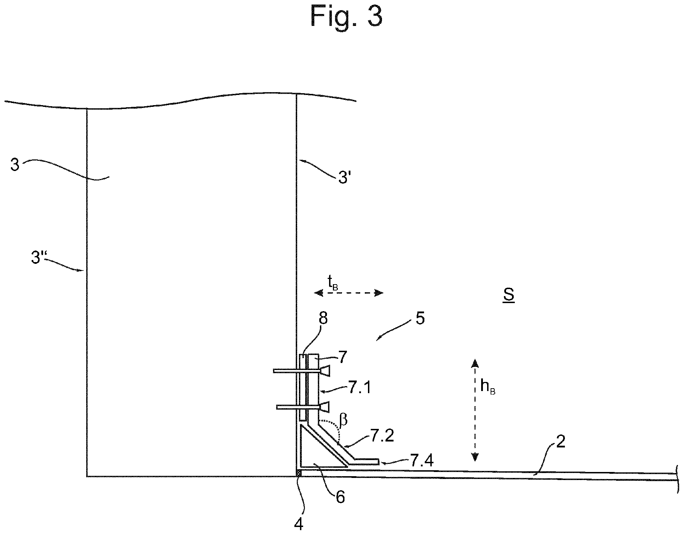

Die Figur 3 zeigt einen Ausschnitt eines senkrecht zur Wandoberfläche 3' verlaufenden Vertikalschnitts einer seitlichen Begrenzungswand 3 im Bereich einer seitlichen Bodenfuge 4 mit einer weiteren bevorzugten Ausführungsform einer Dichtungsanordnung 5 bestehend aus einem Befestigungsprofil 7, einem Fugendichtungselement 6 und einem flächigen Dichtmittel 8.

Das Befestigungsprofil 7 mit einer Höhe h_{B} von rund 100 mm und eine Tiefe t_{B} von rund 70 mm ist analog zu dem Beispiel der Figur 2 als Winkelschiene ausgebildet und an der Wandoberfläche 3' der seitlichen Begrenzungswand 3 mittels Schrauben und Dübeln befestigt. Der als Halteabschnitt für das Fugendichtungselement 6 ausgebildete zweite Schenkelabschnitt 7.2 des Befestigungsprofils 7 schließt mit dem ersten Schenkelabschnitt 7.1 einen stumpfen Winkel β von rund 135° ein.

Das Fugendichtungselement 6 verläuft auf der Bodenplatte 2 aufliegend entlang der Bodenfuge 4 und steht in einem mit Druckfluid beaufschlagten Zustand zusätzlich sowohl mit dem zweiten Schenkelabschnitt 7.2 des Befestigungsprofils 7 als auch mit der Wandoberfläche 3' in Kontakt. Am freien Ende des zweiten Schenkelabschnittes 7.2 schließt in einem stumpfen Winkel ein näherungsweise parallel zur Bodenplatte 2 ausgerichteter Führungsabschnitt 7.4 an, welcher einerseits als Sicherung gegen ein unbeabsichtigtes Herausrutschen oder Abgleiten des mit Druckfluid beaufschlagten und mittels des Befestigungsprofils 7 gehalterten bzw. in seiner Lage fixierten Fugendichtungselementes 6 dient und andererseits das Einschieben oder Einführen des noch nicht mit Druckfluid beaufschlagten Fugendichtungselementes 6 unter den zweiten Schenkelabschnitt 7.2 des Befestigungsprofils 7 erleichtert. Das Fugendichtungselement 6 wird mittels des Befestigungsprofils 7 in seiner entlang der Bodenfugen 4 verlaufenden Position gehalten, wobei das Befestigungsprofil 7 im dargestellten Beispiel so an der Begrenzungswand 3 angeordnet ist, dass der zweite Schenkelabschnitt 7.2 mit der Bodenplatte 2 und der Wandoberfläche 3' ein gedachtes näherungsweise gleichschenkeliges, rechtwinkeliges Dreieck beschreibt. Das mit Druckfluid beaufschlagte Fugendichtungselement 6 wird durch den zweiten Schenkelabschnitt 7.2 des Befestigungsprofils 7 gleichsam in die Ecke im Anschlussbereich zwischen Bodenplatte 2 und Wandoberfläche 3' eingepresst bzw. eingequetscht. Durch den ausgeübten Pressdruck nimmt das in dieser Weise gehalterte, mit Druckfluid beaufschlagte, schlauchförmige Fugendichtungselement 6 aufgrund der Elastizität des Schlauchmaterials eine von der kreisrunden Querschnittsform abweichende, im Wesentlichen dreieckige Querschnittsform ein.

Eine sichere Abdichtung der Bodenfuge 4 kann letztlich dadurch erreicht werden, dass durch das Einquetschen des Fugendichtungselementes 6 zwischen Bodenplatte 2, Wandoberfläche 3' und Befestigungsprofil 7 und das gleichzeitige Anpressen des Dichtmittels 8 an die Wandoberfläche 3' der Begrenzungswand 3 der beim Siliervorgang im Einlagerungsbereich S des Fahrsilos 1 entstehende Silage-Sickersaft an einem Vordringen bis zur Bodenfuge 4 und damit an einem Eindringen in die Bodenfuge 4 effektiv gehindert wird.

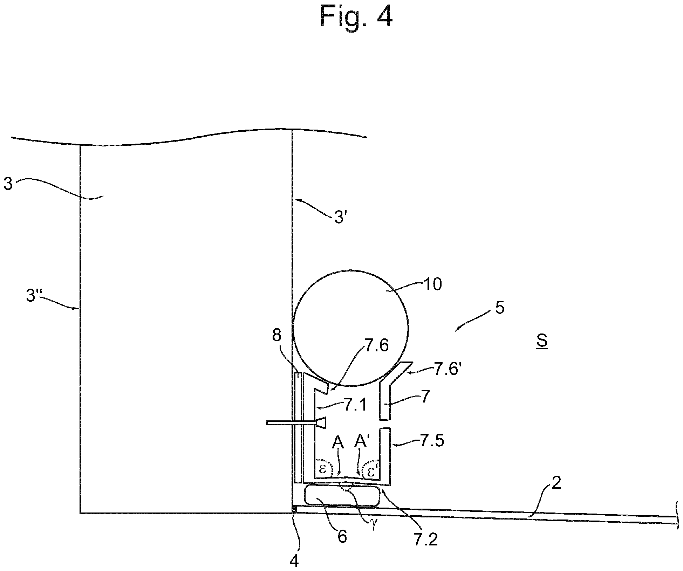

Die Figur 4 zeigt einen Ausschnitt eines senkrecht zur Wandoberfläche 3' verlaufenden Vertikalschnitts einer seitlichen Begrenzungswand 3 im Bereich einer seitlichen Bodenfuge 4 einer weiteren bevorzugten Ausführungsform einer Dichtungsanordnung 5, welche aus einem Befestigungsprofil 7, einem Fugendichtungselement 6, einem flächigen Dichtmittel 8 sowie einem auf dem Befestigungsprofil angeordneten Drainagerohr 10 besteht.

Das U-förmig ausgebildete Befestigungsprofil 7 ist mit seinem ersten Schenkelabschnitt 7.1 an der dem Einlagerungsbereich S des Fahrsilos zugewandten Wandoberfläche 3' der seitlichen Begrenzungswand 3 über Bolzenanker befestigt und weist neben dem ersten und zweiten Schenkelabschnitt 7.1, 7.2 einen dritten Schenkelabschnitt 7.5 auf, welcher an den zweiten Schenkelabschnitt 7.2 anschließt und im Wesentlichen parallel zum ersten Schenkelabschnitt 7.1 orientiert ist. Zur vereinfachten Montage des Befestigungsprofils 7 an der Begrenzungswand 3 sind im dritten Schenkelabschnitt 7.5 Durchbrechungen vorgesehen, um den ersten Schenkelabschnitt 7.1 für entsprechende Montage-Werkzeuge zugänglich zu machen.

An der der Bodenplatte 2 abgewandten oberen Seite des Befestigungsprofils sind der erste und dritte Schenkelabschnitt 7.1, 7.5 jeweils mit einem abgewinkelten Biegeabschnitt ausgestattet 7.6, 7.6', wobei die freien Enden der Biegeabschnitte 7.6, 7.6' von der Begrenzungswand 3 abgewandt in den Einlagerungsbereich S hineinragen. Die Biegeabschnitte 7.6, 7.6' bilden Auflageflächen für das zusätzlich vorgesehene Drainagerohr 10 aus. Das Drainagerohr 10 wird zusätzlich durch Spanndrähte fixiert, welche durch dafür vorgesehene Öffnungen in den ersten und dritten Schenkelabschnitten 7.1, 7.5 des Befestigungsprofils 7 geführt sind und das Drainagerohr 10 umlaufen.

Der den Halteabschnitt für das Fugendichtungselement 6 bildende zweite Schenkelabschnitt 7.2 des Befestigungsprofils 7 ist geknickt ausgebildet und weist einen ersten und einen zweiten Flächenbereich A, A' auf, wobei die Flächenbereiche A, A' einen stumpfen Winkel γ von beispielsweise 170° einschließen. Der erste Flächenbereich A schließt in einem spitzen Winkel ε an den ersten Schenkelabschnitt 7.1 an und der zweite Flächenbereich A' schließt in einem spitzen Winkel ε' an den dritten Schenkelabschnitt 7.5 an. Der zweite Schenkelabschnitt 7.2 beschreibt zusammen mit der Bodenplatte 2 quasi ein gedachtes Dreieck, in dem das Fugendichtungselement 6 aufgenommen ist. Das Fugendichtungselement 6 steht in einem mit Druckfluid beaufschlagten Zustand mit dem zweiten Schenkelabschnitt 7.2 des Befestigungsprofils 7 und mit der Bodenplatte 2 in Kontakt.

Das Fugendichtungselement 6 ist an einem Ende mit einem Endstück versehen, und dadurch einseitig verschlossen. An dem gegenüberliegenden Ende ist ein Anschlussstück für einen Kompressor sowie ein Manometer zum Ablesen des Druckes vorgesehen.

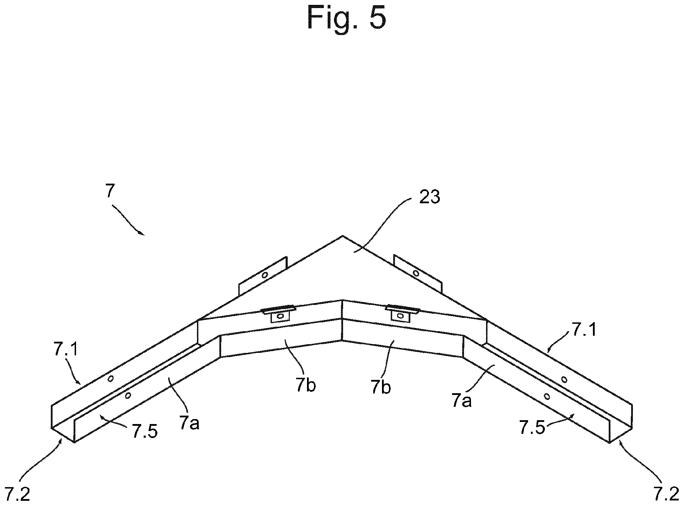

Die Figur 5 zeigt schematisch dargestellt einen Ausschnitt einer Ausführungsform eines Befestigungsprofils 7 in perspektivischer Ansicht, wobei der dargestellte Ausschnitt in einem Eckbereich eines Fahrsilos 1 zwischen einer seitlichen Begrenzungswand 3 und der stirnseitigen Begrenzungswand 9 (siehe Figur 1) angeordnet ist. Das U-förmig ausgebildete Befestigungsprofil 7 weist neben dem ersten und zweiten Schenkelabschnitt 7.1, 7.2 einen dritten Schenkelabschnitt 7.5 auf, ist mehrteilig ausgebildet und aus einzelnen, linearen Winkelschienen 7a, 7b zusammengesetzt. Die einzelnen linearen Winkelschienen 7a, 7b sind dabei bezüglich ihrer Form derart ausgebildet, dass sie über entsprechende Gehrungen in stumpfen Winkeln aneinander anschließen, so dass der dargestellte, entsprechende Abschnitt des Befestigungsprofils 7 näherungsweise einen Bogen beschreibt. Mittels dieses Bogens wird das Befestigungsprofil 7 um den im Wesentlichen rechten Winkel zwischen stirnseitiger und seitlicher Begrenzungswand 9, 3 (siehe Figur 1) geführt. Ein entsprechend angepasstes und im Stoßbereich der Begrenzungswände 3, 9 angeordnetes Deckelelement 23 aus Metall ist zur Abdeckung und Abdichtung des frei bleibenden Raumes in einem Eckbereich ausgebildet. Das Deckelelement 23 kann durch Schrauben in einer seitlichen Begrenzungswand 3 und der stirnseitigen Begrenzungswand 9 verankert werden und zugleich über geeignete Verbindungsmittel mit dem Befestigungselement 7 verbunden werden.

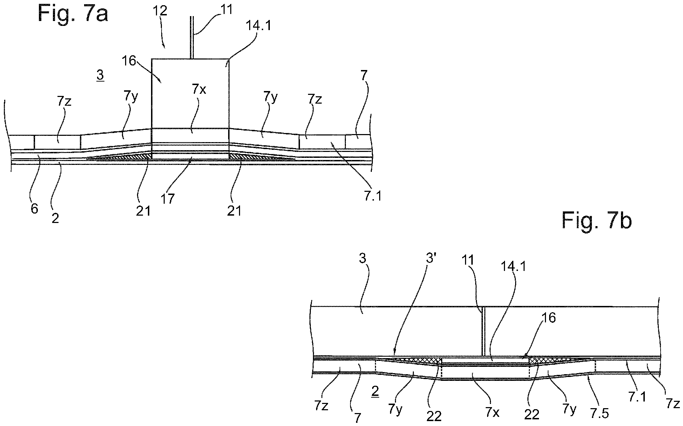

In der Figur 6 ist beispielhaft ein senkrecht zur Begrenzungswand 3 verlaufender Vertikalschnitt im Bereich einer vertikalen Fuge 11 einer bevorzugten Ausführungsform des erfindungsgemäßen Fahrsilos 1 mit einer Dichtungsvorrichtung 12 zur Abdichtung vertikaler Fugen dargestellt. Aus Gründen der Übersichtlichkeit ist die Dichtungsanordnung 5 zur Abdichtung der Bodenfuge 4 in Figur 6 nicht eingezeichnet. Es wird an dieser Stelle aber ausdrücklich auf die Figuren 7a und 7b verwiesen, in denen eine Dichtungsanordnung 5 zur Abdichtung der Bodenfuge 4 kombiniert mit einer Dichtungsvorrichtung 12 zur Abdichtung vertikaler Fugen veranschaulicht wird.

Die seitliche Begrenzungswand 3 mit einer Wandstärke a von rund 330 mm weist in einem an die Bodenplatte 2 anschließenden Bereich eine die Begrenzungswand 3 durchbrechende, zylinderförmig ausgebildete Öffnung 15 mit einem kreisrunden Querschnitt auf. Der Durchmesser der Öffnung 15 beträgt im dargestellten Beispiel rund 152 mm. Die die seitliche Begrenzungswand 3 durchbrechende Öffnung 15 ist mit einer mehrteilig ausgebildeten Dichtungsvorrichtung 12 ausgestattet, welche in der dargestellten, bevorzugten Ausführungsform ein in der Öffnung 15 angeordnetes Dichtelement 13, ein erstes und ein zweites Befestigungselement 14.1, 14.2, eine erste und eine zweite flächige Dichtmatte 18.1, 18.2 sowie zwei Druckelemente 20 aufweist.
Das Dichtelement 13 ist im Wesentlichen in Form eines aus einem relativ weichen, beständigen und elastischen Polyurethan-Schaum bestehenden, geraden Kreiszylinders ausgebildet und weist einen Durchmesser von rund 148 mm auf. Das Dichtelement 13 erstreckt sich mit einer axialen Länge von rund 350 mm über die gesamte Wandstärke a der Begrenzungswand 3 und weist außerdem jeweils einen über die Wandoberflächen 3', 3" hinausragenden Abschnitt 13', 13" auf.

Die Befestigungselemente 14.1, 14.2 dienen zur fixierenden Befestigung des in der Öffnung 15 angeordneten Dichtelementes 13. Die aus Edelstahl bestehenden Befestigungselemente 14.1, 14.2 sind im dargestellten Beispiel abgewinkelt ausgebildet und weisen jeweils einen flächigen, im Wesentlichen parallel zu den Wandoberflächen 3', 3" orientierten vertikalen Abschnitt 16 und einen flächigen, näherungsweise parallel zur Bodenplatte 2 verlaufenden horizontalen Abschnitt 17 auf. Der flächige, im Wesentlichen rechteckförmige, vertikale Abschnitt 16 der Befestigungselemente 14.1, 14.2 weist mit seinen Maßen von rund 220 mm x 250 mm eine ausreichende Größe auf, um die mit dem Dichtelement 13 versehene Öffnung 15 vollflächig zu verdecken und gleichzeitig einen überstehenden Bereich zur Befestigung an der Begrenzungswand 3 zur Verfügung zu stellen.

Zwischen den Wandoberflächen 3', 3" und den jeweiligen Befestigungselementen 14.1, 14.2 sind zur zusätzlichen Verbesserung der Abdichtung der vertikalen Fugen eine erste flächige Dichtmatte 18.1 bzw. eine zweite flächige Dichtmatte 18.2 angeordnet. Die aus Ethylen-Propylen-Dien-Kautschuk (EPDM) hergestellten Dichtmatten 18.1, 18.2 mit einer Dicke bzw. einer Stärke von rund 10 mm sind ebenfalls abgewinkelt ausgebildet und weisen einen vertikalen, im Wesentlichen parallel zur Wandoberfläche 3', 3" orientierten Abschnitt sowie einen horizontalen, im Wesentlichen parallel zur Bodenplatte 2 orientierten Abschnitt auf. Der vertikale Abschnitt einer jeden Dichtmatte 18.1, 18.2 weist eine näherungsweise kreisrunde Durchbrechung 19 mit einem Durchmesser von rund 160 mm auf, mittels derer die Dichtmatten 18.1, 18.2 auf die über die Wandoberflächen 3', 3" hinausragenden Abschnitte 13', 13" des Dichtelementes 13 aufgeschoben sind. Die über die Wandoberflächen 3', 3" hinausragenden Abschnitte 13', 13" des Dichtelementes 13 sind somit in den Durchbrechungen 19 der ersten und zweiten Dichtmatte 18.1, 18.2 aufgenommen.

Beim Befestigen bzw. Verankern der Befestigungselemente 14.1, 14.2 an bzw. in der Begrenzungswand 3 wirkt eine näherungsweise horizontal ausgerichtete Druckkraft auf die zwischen den Befestigungselementen 14.1, 14.2 und den Wandoberflächen 3', 3" angeordneten Dichtmatten 18.1, 18.2 sowie auf das Dichtelement 13. Vor der Verankerung der Befestigungselemente 14.1, 14.2 ist das Dichtelement 13 aufgrund seines im Vergleich zum Durchmesser der Öffnung 15 geringeren Durchmessers zunächst locker in der Öffnung 15 angeordnet und ragt mit den Abschnitten 13', 13" über die Wandoberflächen 3', 3" hinaus. Durch den Pressdruck erfährt das Dichtelement 13 eine Verformung, wodurch sich sein Durchmesser an den Durchmesser der Öffnung 15 angleicht bis das Dichtelement 13 die Öffnung 15 nahezu vollständig ausfüllt. Das Dichtelement 13 wird sozusagen in die Öffnung 15 hineingepresst bis es formschlüssig und im Klemmsitz in der Öffnung 15 aufgenommen ist. Dadurch kann eine besonders wirksame Abdichtung der vertikalen Fuge erreicht werden.

Zur zusätzlichen Ausübung einer in Richtung der Bodenplatte 2 orientierten Kraft sind in der beispielhaften Dichtungsvorrichtung 12 Druckelemente 20 in Form von Edelstahlwinkeln vorgesehen. Die näherungsweise senkrecht von den Wandoberflächen 3', 3" abstehenden, freien Schenkelabschnitte der Edelstahlwinkel 20 sind mit Bohrungen und Kontermuttern versehen und stehen zum Eindrehen von vertikal ausgerichteten Schrauben zur Verfügung. Die Schrauben wiederum treten mit einer am oberen Rand des flächigen, vertikalen Abschnittes 16 der Befestigungselemente 14.1, 14.2 ausgebildeten Anlagefläche in Kontakt und wirken auf diese ein. Durch Eindrehen einer Schraube kann so eine nach unten gerichtete Druckkraft auf das Befestigungselement 14.1, 14.2 übertragen werden. Durch die für die Befestigung bzw. Verankerung vorgesehenen Langlöcher in den vertikalen Abschnitten 16 der Befestigungselemente 14.1, 14.2 können die Befestigungselemente 14.1, 14.2 mittels der übertragenen axialen Druckkraft unter Anpressen der Dichtmatten 18.1, 18.2 in Richtung Bodenplatte 2 gedrückt werden.

Die Figuren 7a und 7b zeigen schematisch dargestellt einen Ausschnitt einer Ausführungsform eines Fahrsilos 1 in einem parallel zur Längsachse LA des Fahrsilos 1 verlaufenden Längsschnitt (Fig. 7a) bzw. in einer Draufsicht von oben (Fig. 7b). Das Fahrsilo 1 weist sowohl eine Dichtungsanordnung 5 zur Abdichtung der Bodenfugen 4 als auch eine Dichtungsvorrichtung 12 zur Abdichtung vertikaler Fugen 11 auf. Um eine gegenseitige räumliche Behinderung der Dichtungsanordnung 5 und der Dichtungsvorrichtung 12 zu vermeiden, ist das Befestigungsprofil 7 in einer Weise ausgebildet, die Dichtungsvorrichtung 12 zu umgehen und so eine geeignete Führung und Fixierung des Fugendichtungselementes 6 sicherzustellen. Das Fugendichtungselement 6 kann dadurch entlang des vertikalen Abschnittes 16 und aufliegend auf dem horizontalen Abschnitt 17 des Befestigungselementes 14.1 geführt und fixiert werden.

Das U-förmige Befestigungsprofil 7 ist dazu im Bereich der vertikalen Fugen 11 mehrteilig ausgebildet und ist aus mehreren Winkelschienen 7x, 7y, 7z zusammengesetzt. Die einzelnen Winkelschienen 7x, 7y, 7z sind bezüglich ihrer Form und Ausgestaltung derart ausgebildet, dass eine an der Begrenzungswand 3 angeordnete Dichtungsvorrichtung 12 sowohl in horizontaler als auch in vertikaler Orientierung möglichst fließend und stufenlos umgangen bzw. umlaufen werden kann, so dass das Fugendichtungselement 6 keine abrupten, größeren Höhenunterschiede überwinden muss und auch in horizontaler Richtung nicht abgeknickt wird.

Während der jeweils erste Schenkelabschnitt 7.1 der Winkelschienen 7z vollflächig an der Wandoberfläche 3' anliegt und die Winkelschiene 7x ebenfalls vollflächig mit ihrem ersten Schenkelabschnitt 7.1 an dem vertikalen Abschnitt 16 des Befestigungselementes 14.1 anliegt, ist zwischen der Wandoberfläche 3' der Begrenzungswand 3 und dem jeweils ersten Schenkelabschnitt 7.1 der Winkelschienen 7y ein freier Raum mit dreieckigem Querschnitt ausgebildet. Dieser freie Raum ist jeweils mit einem Dichtblech 22 abgedeckt bzw. abgedichtet.

Um einen fließenden Höhenausgleich zwischen Bodenplatte und horizontalem Abschnitt 17 des Befestigungselementes 14.1 zu schaffen, sind Keilelemente 21 vorgesehen, welche angrenzend an die horizontalen Abschnitte 17 des Befestigungselementes 14.1 angeordnet sind.

### Bezugszeichenliste

- 1: Fahrsilo
- 2: Bodenplatte
- 3: seitliche Begrenzungswand
- 3', 3": Wandoberfläche
- 4: seitliche Bodenfuge
- 4': stirnseitige Bodenfuge
- 5: Dichtungsanordnung
- 6: Fugendichtungselement
- 7: Befestigungsprofil
- 7a, 7b: Winkelschienen
- 7x, 7y, 7z: Winkelschienen
- 7.1: erster Schenkelabschnitt
- 7.2: zweiter Schenkelabschnitt
- 7.3: Anschlagabschnitt
- 7.4: Führungsabschnitt
- 7.5: dritter Schenkelabschnitt
- 7.6, 7.6': Biegeabschnitt
- 8: Dichtmittel
- 9: stirnseitige Begrenzungswand
- 9': Wandoberfläche
- 10: Drainagerohr
- 11: vertikale Fuge
- 12: Dichtungsvorrichtung zur Abdichtung vertikaler Fugen
- 13: Dichtelement
- 13', 13": hinausragender Abschnitt des Dichtelementes
- 14.1, 14.2: erstes und zweites Befestigungselement
- 15: Öffnung
- 16: vertikaler Abschnitt des Befestigungselementes
- 17: horizontaler Abschnitt des Befestigungselementes
- 18.1, 18.2: Dichtmatten
- 19: vertikaler Abschnitt der Dichtmatten
- 20: Druckelement
- 21: Keilelement
- 22: Dichtblech
- 23: Deckelelement

- A, A': erster und zweiter Flächenbereich des zweiten Schenkelabschnittes
- α: rechter Winkel zwischen den Schenkelabschnitten
- β: stumpfer Winkel zwischen Schenkelabschnitten
- ε, ε': spitzer Winkel zwischen Schenkelabschnitten
- γ: stumpfer Winkel zwischen Flächenbereichen
- LA: Längsachse
- S: Einlagerungsbereich für Silage

## Patentansprüche

1. Fahrsilo (1) umfassend eine Bodenplatte (2) und zumindest zwei, einen Einlagerungsbereich (S) abgrenzende seitliche Begrenzungswände (3), wobei das Fahrsilo (1) in den Anschlussbereichen von Bodenplatte (2) und seitlichen Begrenzungswänden (3) jeweils eine seitliche Bodenfuge (4) aufweist, wobei das Fahrsilo (1) im Bereich zumindest einer Bodenfuge (4) mit einer Dichtungsanordnung (5) ausgestattet ist, **dadurch gekennzeichnet, dass** die Dichtungsanordnung (5) zumindest ein schlauchförmiges, mit einem Druckfluid beaufschlagtes Fugendichtungselement (6) und wenigstens ein Befestigungsprofil (7) aufweist, wobei das Befestigungsprofil (7) an einer dem Einlagerungsbereich (S) zugewandten Wandoberfläche (3') der Begrenzungswand (3) an der Begrenzungswand (3) befestigt ist und wobei das an der Begrenzungswand (3) befestigte Befestigungsprofil (7) das auf der Bodenplatte (2) aufliegende, entlang der Bodenfuge (4) verlaufende und mit einem Druckfluid beaufschlagte Fugendichtungselement (6) fixiert.

2. Fahrsilo (1) nach Anspruch 1, **dadurch gekennzeichnet, dass** es sich bei dem Fugendichtungselement (6) um einen verschließbaren Schlauch handelt, wobei der Schlauch vorzugsweise aus elastischen Polymeren hergestellt ist.

3. Fahrsilo (1) nach Anspruch 1 oder 2, **dadurch gekennzeichnet, dass** das Befestigungsprofil (7) als Winkelschiene ausgebildet ist, wobei das Befestigungsprofil (7) wenigstens einen ersten und einen zweiten Schenkelabschnitt (7.1, 7.2) aufweist, wobei der erste Schenkelabschnitt (7.1) im Wesentlichen parallel zur Wandoberfläche (3') der Begrenzungswand (3) orientiert und zur Befestigung an der Begrenzungswand (3) vorgesehen ist und wobei der zweite Schenkelabschnitt (7.2) mit dem Fugendichtungselement (6) in Kontakt steht und einen Halteabschnitt für das Fugendichtungselement (6) bildet.

4. Fahrsilo (1) nach Anspruch 3, **dadurch gekennzeichnet, dass** das Befestigungsprofil (7) im Wesentlichen U-förmig ausgebildet ist und zusätzlich einen dritten Schenkelabschnitt (7.5) aufweist, wobei der dritte Schenkelabschnitt (7.5) an den zweiten Schenkelabschnitt (7.2) anschließt.

5. Fahrsilo (1) nach einem der vorhergehenden Ansprüche, **dadurch gekennzeichnet, dass** die Dichtungsanordnung (5) zusätzlich ein flächiges Dichtmittel (8) aufweist, wobei das Dichtmittel (8) zwischen dem Befestigungsprofil (7) und der seitlichen Begrenzungswand (3) angeordnet und im Wesentlichen parallel zur Wandoberfläche (3') orientiert ist.

6. Fahrsilo (1) nach einem der vorhergehenden Ansprüche, **dadurch gekennzeichnet, dass** eine stirnseitige Begrenzungswand (9) vorgesehen ist, wobei das Fahrsilo (1) im Anschlussbereich von Bodenplatte (2) und stirnseitiger Begrenzungswand (9) eine stirnseitige Bodenfuge (4') aufweist und wobei das Fugendichtungselement (6) zur gleichzeitigen Abdichtung der seitlichen und stirnseitigen Bodenfugen (4, 4') umlaufend und einstückig ausgebildet ist.

7. Fahrsilo (1) nach einem der vorhergehenden Ansprüche, **dadurch gekennzeichnet, dass** zusätzlich eine Messeinheit zur Messung des Druckes in dem mit Druckfluid beaufschlagten Fugendichtungselement (6) vorgesehen ist.

8. Fahrsilo (1) nach einem der Ansprüche 1 bis 7, **dadurch gekennzeichnet, dass** in zumindest einer seitlichen Begrenzungswand (3) zumindest eine vertikal verlaufende Fuge (11) ausgebildet ist und die zumindest eine Begrenzungswand (3) mit wenigstens einer, im Bereich der vertikalen Fuge (11) angeordneten und die Begrenzungswand (3) durchbrechenden Öffnung (15) versehen ist und die Öffnung (15) mit einer Dichtungsvorrichtung (12) ausgestattet ist, wobei die Dichtungsvorrichtung (12) mehrteilig ausgebildet ist und zumindest ein in der Öffnung (15) angeordnetes Dichtelement (13) und wenigstens zwei Befestigungselemente (14.1, 14.2) aufweist, wobei sich das Dichtelement (13) über mindestens eine Wandstärke (a) der Begrenzungswand (3) erstreckt und mindestens einen über die Wandoberflächen (3', 3") hinausragenden Abschnitt (13', 13") aufweist und wobei die Befestigungselemente (14.1, 14.2) an den sich gegenüberliegenden Wandoberflächen (3', 3") angeordnet sind.

9. Fahrsilo (1) nach Anspruch 8, **dadurch gekennzeichnet, dass** jedes Befestigungselement (14.1, 14.2) zumindest einen flächig ausgebildeten vertikalen Abschnitt (16) aufweist, wobei der vertikale Abschnitt (16) im Wesentlichen parallel zu den Wandoberflächen (3', 3") der seitlichen Begrenzungswand (3) orientiert ist.

10. Fahrsilo (1) nach Anspruch 8 oder 9, **dadurch gekennzeichnet, dass** die Dichtungsvorrichtung (12) wenigstens zwei flächige, jeweils zumindest einen vertikalen Abschnitt aufweisende Dichtmatten (18.1, 18.2) aufweist, wobei zumindest der vertikale Abschnitt einer jeden flächigen Dichtmatte im Wesentlichen parallel zur Wandoberfläche (3', 3") und jeweils zwischen einer Wandoberfläche (3', 3") und einem Befestigungselement (14.1, 14.2) angeordnet ist.

11. Fahrsilo (1) nach Anspruch 10, **dadurch gekennzeichnet, dass** die flächige Dichtmatte (18.1, 18.2) im Bereich ihres vertikalen Abschnittes eine an Geometrie und Abmessungen des Dichtelementes (13) angepasste Durchbrechung (19) aufweist, wobei die flächige Dichtmatte (18.1, 18.2) mittels der Durchbrechung (19) auf den über die Wandoberfläche (3', 3") hinausragenden Abschnitt (13', 13") des Dichtelementes (13) aufsteckbar ist.

12. Fahrsilo (1) nach einem der Ansprüche 8 bis 11, **dadurch gekennzeichnet, dass** die Dichtungsvorrichtung (12) zusätzlich ein Druckelement (20) zur Ausübung einer in Richtung der Bodenplatte (2) orientierten Kraft aufweist.

13. Verfahren zur Abdichtung und Sanierung von Bodenfugen (4, 4') in einem Fahrsilo (1), **gekennzeichnet durch** die Schritte
a) Bereitstellen einer Dichtungsanordnung (5), wobei die Dichtungsanordnung (5) zumindest ein schlauchförmiges, mit einem Druckfluid beaufschlagbares Fugendichtungselement (6) und wenigstens ein Befestigungsprofil (7) aufweist,
b) Positionieren und Befestigen des Befestigungsprofils (7) an einer einem Einlagerungsbereich (S) zugewandten Wandoberfläche (3') einer Begrenzungswand (3) des Fahrsilos (1) in einem an die Bodenplatte (2) anschließenden Bereich,
c) Einschieben des Fugendichtungselementes (6) zwischen die Bodenplatte (2) und das an der Begrenzungswand befestigte Befestigungsprofil (7),
d) Beaufschlagen des Fugendichtungselementes (6) mit Druckfluid und Verschließen des Fugendichtungselementes (6).

14. Verfahren nach Anspruch 13, **dadurch gekennzeichnet, dass** nach Schritt d) zusätzlich der Schritt
e) Messen des Druckes in dem mit Druckfluid beaufschlagten Fugendichtungselement (6) mittels einer Messeinheit zur Messung des Druckes
durchgeführt wird.

15. Verfahren nach Anspruch 14, **dadurch gekennzeichnet, dass** zur Durchführung einer Leckagekontrolle der Schritt e) in vorgegebenen Zeitintervallen wiederholt wird.

## Claims

1. Trench silo (1) comprising a base plate (2) and at least two lateral boundary walls (3) delimiting a storage region (S), wherein the trench silo (1) has one respective lateral base joint (4) in the connecting regions of the base plate (2) and the lateral boundary walls (3), wherein the trench silo (1) is provided in the region of at least one base joint (4) with a sealing arrangement (5), **characterised in that** the sealing arrangement (5) comprises at least one tubular joint sealing element (6) pressurized with a pressure fluid and at least one fastening profile (7), wherein the fastening profile (7) is fastened to the boundary wall (3) on a wall surface (3') of the boundary wall (3) facing the storage region (S) and wherein the fastening profile (7) fastened to the boundary wall (3) fixes the joint sealing element (6) which bears against the base plate (2), which extends along the base joint (4) and which is pressurized with pressure fluid.

2. Trench silo (1) according to Claim 1, **characterised in that** the joint sealing element (6) is a closable tube, wherein the tube is preferably produced from elastic polymers.

3. Trench silo (1) according to Claim 1 or 2, **characterised in that** the fastening profile (7) is configured as an angled rail, wherein the fastening profile (7) has at least one first and one second limb portion (7.1, 7.2), wherein the first limb portion (7.1) is oriented substantially parallel to the wall surface (3') of the boundary wall (3) and is provided for fastening to the boundary wall (3) and wherein the second limb portion (7.2) is in contact with the joint sealing element (6) and forms a retaining portion for the joint sealing element (6).

4. Trench silo (1) according to Claim 3, **characterised in that** the fastening profile (7) is of substantially U-shaped configuration and additionally has a third limb portion (7.5), wherein the third limb portion (7.5) adjoins the second limb portion (7.2).

5. Trench silo (1) according to one of the preceding claims, **characterised in that** the sealing arrangement (5) additionally comprises a planar sealing means (8), wherein the sealing means (8) is arranged between the fastening profile (7) and the lateral boundary wall (3) and is oriented substantially parallel to the wall surface (3').

6. Trench silo (1) according to one of the preceding claims, **characterised in that** a boundary wall (9) is provided on the face side, wherein the trench silo (1) in the connecting region of the base plate (2) and the boundary wall (9) on the face side has a face side base joint (4') and wherein the joint sealing element (6) is configured in a circumferential and integral manner for simultaneous sealing of the base joints (4, 4') on the side and on the face side.

7. Trench silo (1) according to one of the preceding claims, **characterised in that** additionally a measuring unit is provided for measuring the pressure in the joint sealing element (6) pressurized with pressure fluid.

8. Trench silo (1) according to one of Claims 1 to 7, **characterised in that** at least one vertically extending joint (11) is configured in at least one lateral boundary wall (3) and the at least one boundary wall (3) is provided with at least one opening (15) arranged in the region of the vertical joint (11) and passing through the boundary wall (3), and the opening (15) is provided with a sealing device (12), wherein the sealing device (12) is configured in multiple parts and comprises at least one sealing element (13) arranged in the opening (15) and at least two fastening elements (14.1, 14.2), wherein the sealing element (13) extends over at least one wall thickness (a) of the boundary wall (3) and has at least one portion (13', 13") protruding over the wall surfaces (3', 3") and wherein the fastening elements (14.1, 14.2) are arranged on the opposing wall surfaces (3', 3").

9. Trench silo (1) according to Claim 8, **characterised in that** each fastening element (14.1, 14.2) has at least one vertical portion (16) which is configured to be planar, wherein the vertical portion (16) is oriented substantially parallel to the wall surfaces (3', 3") of the lateral boundary wall (3).

10. Trench silo (1) according to Claim 8 or 9, **characterised in that** the sealing device (12) comprises at least two planar sealing mats (18.1, 18.2) comprising in each case at least one vertical portion, wherein at least the vertical portion of each planar sealing mat is arranged substantially parallel to the wall surface (3', 3") and in each case between a wall surface (3', 3") and a fastening element (14.1, 14.2).

11. Trench silo (1) according to Claim 10, **characterised in that** the planar sealing mat (18.1, 18.2) in the region of its vertical portion comprises a through-hole (19) adapted to the geometry and dimensions of the sealing element (13), wherein the planar sealing mat (18.1, 18.2) can be plugged on the portion (13', 13") of the sealing element (13) protruding over the wall surface (3', 3") by means of the through-hole (19).

12. Trench silo (1) according to one of Claims 8 to 11, **characterised in that** the sealing device (12) additionally comprises a pressure element (20) for applying a force oriented in the direction of the base plate (2).

13. Method for sealing and restoring base joints (4, 4') in a trench silo (1), **characterised by** the steps
a) providing a sealing arrangement (5), wherein the sealing arrangement (5) comprises at least one tubular joint sealing element (6) which can be pressurized with a pressure fluid and at least one fastening profile (7),
b) positioning and fastening the fastening profile (7) onto a wall surface (3') of a boundary wall (3) of the trench silo (1) facing a storage region (S), in a region adjoining the base plate (2),
c) inserting the joint sealing element (6) between the base plate (2) and the fastening profile (7) fastened to the boundary wall,
d) pressurizing the joint sealing element (6) with pressure fluid and closing the joint sealing element (6).

14. Method according to Claim 13, **characterised in that** after step d) additionally the step
e) measuring the pressure in the joint sealing element (6) which is pressurized with pressure fluid by means of a measuring unit for measuring the pressure
is carried out.

15. Method according to Claim 14, **characterised in that** for carrying out a leakage check, step e) is repeated at predetermined time intervals.

## Revendications

1. Silo-couloirs (1) comprenant une plaque de fond (2) et au moins deux parois de délimitation (3) latérales délimitant une zone d'ensilage (S), le silo-couloirs (1) comportant respectivement dans les zones de raccordement de la plaque de fond (2) et des parois de délimitation latérales (3) un joint de fond latéral (4), le silo-couloirs (1) étant équipé dans la zone d'au moins un joint de fond (4) d'un ensemble d'étanchéité (5), **caractérisé en ce que** l'ensemble d'étanchéité (5) comporte au moins un élément d'étanchéité de joint (6) en forme de flexible, recevant un fluide sous pression et au moins un profilé de fixation (7), le profilé de fixation (7) étant fixé sur une surface de paroi (3') tournée vers la zone d'ensilage (S) de la paroi de délimitation (3) à la paroi de délimitation (3) et le profilé de fixation (7) fixé à la paroi de délimitation (3) fixant l'élément d'étanchéité de joint (6) reposant sur la plaque de fond (2), passant le long du joint de fond (4) et recevant un fluide sous pression.

2. Silo-couloirs (1) selon la revendication 1, **caractérisé en ce que** concernant l'élément d'étanchéité de joint (6), il s'agit d'un flexible pouvant être fermé, le flexible étant réalisé de préférence en polymères élastiques.

3. Silo-couloirs (1) selon la revendication 1 ou 2, **caractérisé en ce que** le profilé de fixation (7) est constitué comme une cornière, le profilé de fixation (7) comportant au moins une première et une deuxième section de branche (7.1, 7.2), la première section de branche (7.1) étant orientée pour l'essentiel parallèlement à la surface de paroi (3') de la paroi de délimitation (3) et étant prévue pour fixation à la paroi de délimitation (3) et la deuxième section de branche (7.2) étant en contact avec l'élément d'étanchéité de joint (6) et formant une section de retenue pour l'élément d'étanchéité de joint (6).

4. Silo-couloirs (1) selon la revendication 3, **caractérisé en ce que** le profilé de fixation (7) est constitué pour l'essentiel en forme de U et comporte en plus une troisième section de branche (7.5), la troisième section de branche (7.5) se raccordant à la deuxième section de branche (7.2).

5. Silo-couloirs (1) selon l'une quelconque des revendications précédentes, **caractérisé en ce que** l'ensemble d'étanchéité (5) comporte en plus un moyen d'étanchéité plan (8), le moyen d'étanchéité (8) étant disposé entre le profilé de fixation (7) et la paroi de délimitation latérale (3) et étant orienté pour l'essentiel parallèlement à la surface de paroi (3').

6. Silo-couloirs (1) selon l'une quelconque des revendications précédentes, **caractérisé en ce qu'**une paroi de délimitation avant (9) est prévue, le silo-couloirs (1) comportant dans la zone de raccordement de la plaque de fond (2) et de la paroi de délimitation avant (9) un joint de fond avant (4') et l'élément d'étanchéité de joint (6) étant constitué de manière circulant et en une seule pièce pour étanchéifier simultanément les joints de fond (4, 4') latéraux et avant.

7. Silo-couloirs (1) selon l'une quelconque des revendications précédentes, **caractérisé en ce qu'**une unité de mesure est en plus prévue pour la mesure de la pression dans l'élément d'étanchéité de joint (6) recevant un fluide sous pression.

8. Silo-couloirs (1) selon l'une quelconque des revendication 1 à 7, **caractérisé en ce qu'**au moins un joint (11) passant verticalement est constitué dans au moins une paroi de délimitation latérale (3) et au moins une paroi de délimitation (3) est dotée d'au moins une ouverture (15) disposée dans la zone du joint vertical (11) et traversant la paroi de délimitation (3) et l'ouverture (15) est munie d'un dispositif d'étanchéité (12), le dispositif d'étanchéité (12) étant constitué de plusieurs parties et comportant au moins un élément d'étanchéité (13) disposé dans l'ouverture (15) et au moins deux éléments de fixation (14.1, 14.2), l'élément d'étanchéité (13) s'étendant sur au moins une épaisseur de paroi (a) de la paroi de délimitation (3) et comportant au moins une section (13', 13") dépassant au-dessus des surfaces de paroi (3', 3") et les éléments de fixation (14.1, 14.2) étant disposés sur les surfaces de paroi (3', 3") s'opposant.

9. Silo-couloirs (1) selon la revendication 8, **caractérisé en ce que** chaque élément de fixation (14.1, 14.2) comporte au moins une section verticale (16) constituée à plat, la section verticale (16) étant orientée pour l'essentiel parallèlement aux surfaces de paroi (3', 3") de la paroi de délimitation latérale (3).

10. Silo-couloirs (1) selon la revendication 8 ou 9, **caractérisé en ce que** le dispositif d'étanchéité (12) comporte au moins deux matelas d'étanchéité (18.1, 18.2) planes, comportant respectivement au moins une section verticale, au moins la section verticale de chacune des matelas d'étanchéité planes étant pour l'essentiel disposée parallèlement à la surface de paroi (3', 3") et respectivement entre une surface de paroi (3', 3") et un élément de fixation (14.1, 14.2).

11. Silo-couloirs (1) selon la revendication 10, **caractérisé en ce que** les matelas d'étanchéité planes (18.1, 18.2) comporte dans la zone de leur section verticale un passage (19) adapté à la géométrie et aux dimensions de l'élément d'étanchéité (13), le matelas d'étanchéité plane (18.1, 18.2) pouvant être emboîtée au moyen du passage (19) sur la section (13', 13") de l'élément d'étanchéité (13), dépassant au-dessus de la surface de paroi (3', 3").

12. Silo-couloirs (1) selon l'une quelconque des revendications 8 à 11, **caractérisé en ce que** le dispositif d'étanchéité (12) comporte en plus un élément de pression (20) pour exercer une force orientée dans la direction de la plaque de fond (2).

13. Procédé pour étanchéifier et assainir des joints de fond (4, 4') dans un silo-couloirs (1), **caractérisé par** les étapes de
a) fourniture d'un ensemble d'étanchéité (5), l'ensemble d'étanchéité (5) comportant au moins un élément d'étanchéité de joint (6) en forme de flexible, recevant un fluide sous pression et au moins un profilé de fixation (7),
b) positionnement et fixation du profilé de fixation (7) sur une surface de paroi (3') tournée vers une zone d'ensilage (S) d'une paroi de délimitation (3) du silo-couloirs (1) dans une zone se raccordant à la plaque de fond (2),
c) insertion de l'élément d'étanchéité de joint (6) entre la plaque de fond (2) et le profilé de fixation (7) fixé à la paroi de délimitation,
d) application à l'élément d'étanchéité de joint (6) d'un fluide sous pression et fermeture de l'élément d'étanchéité de joint (6).

14. Procédé selon la revendication 13, **caractérisé en ce qu'**après l'étape d), on exécute en plus l'étape
e) mesure de la pression dans l'élément d'étanchéité de joint (6) recevant du fluide sous pression au moyen d'une unité de mesure pour mesurer la pression.

15. Procédé selon la revendication 14, **caractérisé en ce que** pour exécuter un contrôle de fuite, l'étape e) est répétée à des intervalles de temps prédéfinis.
